# EUROPÄISCHE PATENTSCHRIFT

(11) **EP 2 923 181 B1**
(45) Veröffentlichungstag und Bekanntmachung des Hinweises auf die Patenterteilung: **14.07.2021**
(21) Anmeldenummer: 13783585.6
(22) Anmeldetag: 29.10.2013
(51) Int. Cl.: G01F 1/58

(54) **MAGNETISCH-INDUKTIVE DURCHFLUSSMESSEINRICHTUNG**
ELECTROMAGNETIC FLOWMETER
DÉBITMÈTRE ÉLECTROMAGNÉTIQUE

(30) Priorität: 22.11.2012 DE 202012104525 U
(43) Veröffentlichungstag der Anmeldung: 30.09.2015
(73) Patentinhaber: Endress+Hauser Flowtec AG, 4153 Reinach (BL) (CH)
(72) Erfinder: GRAF, Oliver, CH-4447 Känerkinden (CH)
(74) Vertreter: Andres, Angelika Maria
(86) Internationale Anmeldenummer: PCT/EP2013/072562
(87) Internationale Veröffentlichungsnummer: WO 2014/079660

(56) Entgegenhaltungen:
- FR-A- 1 290 461
- GB-A- 917 409
- GB-A- 2 170 010
- US-A- 5 337 607
- None

## Beschreibung

Die Erfindung betrifft eine magnetisch-induktive Durchflussmesseinrichtung, umfassend zumindest zwei Polschuhe und zumindest einen Spulenkern.

Magnetisch-induktive Durchflussmesseinrichtungen mit Polschuhen sind im Stand der Technik bekannt. Diese sehen eine volumetrische Strömungsmessung in einem Messrohr unter Nutzen der elektrodynamischen Induktion vor. Sie umfassen Messelektroden, die eine Messspannung ermitteln. Diese wird dadurch induziert, dass ein Magnetfeld senkrecht zu bewegten Ladungsträgern eines durch das Messrohr strömenden Mediums erzeugt wird und die Messelektroden im Wesentlichen senkrecht zur Durchflussrichtung des Mediums und senkrecht zur Richtung des Magnetfeldes angeordnet werden. Die in den Messelektroden induzierte Messspannung ist proportional zu der über den Querschnitt des Messrohres gemittelten Strömungsgeschwindigkeit des Mediums, somit proportional zum Volumenstrom. Bei bekannter Dichte des Mediums lässt sich der Massestrom in dem Messrohr bestimmen. Zum Abgreifen der Messspannung sind zumeist zwei Messelektroden vorgesehen, also ein Messelektrodenpaar. Dieses wird entlang der Messrohrachse im Bereich maximaler Magnetfeldstärke angeordnet, also im Bereich der erwarteten maximalen Messspannung.

Beispielsweise offenbart die WO 2008/028872 A1 ein magnetisch-induktives Durchflussmessgerät zum Messen des Volumen- oder Massestroms eines Mediums in eine Rohrleitung, umfassend ein Messrohr, das das Medium in Richtung der Messrohrachse durchströmt, ein Magnetsystem, das ein das Messrohr durchsetzendes, im Wesentlichen quer zur Messrohrachse verlaufendes Magnetfeld erzeugt, zumindest eine mit dem Medium gekoppelte Messelektrode, die in einem im Wesentlichen senkrecht zum Magnetfeld liegenden Bereich des Messrohres angeordnet ist, und eine Regel-/ Auswerteeinheit, die anhand der in die zumindest eine Messelektrode induzierten Messspannung Informationen über den Volumen- oder Massestrom des Mediums in dem Messrohr liefert.

Aus der WO 2011/091899 A1 ist ein weiteres magnetisch-induktives Durchflussmessgerät bekannt. Bei diesem ist eine erste Spulenbaugruppe mit einem

Spulenkörper zur Aufnahme eines Polkerns einer Spule vorgesehen, wobei die Spule auf dem Spulenkörper und der Spulenkern in einer ersten Öffnung des Spulenkörpers mit einer Längsachse des Spulenkerns koaxial zur Spule angeordnet ist. Der Spulenkern weist eine Ausformung auf und der Spulenkörper einen Anschlag, der zwischen Messrohr und Spule angeordnet ist. Der Spulenkern ist als Polschuh ausgeformt. Zwischen Spulenkern und Messrohr ist zumindest ein Polblech angeordnet, wobei jedes Polblech separat in ein dafür vorgesehenes Formnest im Spulenkörper im montierten Zustand desselben eingeklickt ist. Der Spulenkörper weist zumindest eine Kabelführung zur Führung eines Kabels auf, so dass das geführte Kabel einer vorgegebenen Länge einen vorgebenden Abstand zum Spulenkörper nicht überschreitet.

Beim Positionieren eines Kabels, insbesondere eines Koaxialkabels, in einer magnetisch-induktiven Durchflussmesseinrichtung im Bereich von Polschuh und/oder Spulenkern besteht die Gefahr, dass das Kabel verklemmt oder verletzt wird durch in diesen Bereichen vorhandene Metallkanten. Eine mögliche Verletzung des Kabels am Spulenkern kann zu einem Kurzschluss führen, insbesondere bei Vibrationen während des Betriebs der magnetisch-induktiven Durchflussmesseinrichtung.

Der vorliegenden Erfindung liegt daher die Aufgabe zugrunde, eine magnetisch-induktive Durchflussmesseinrichtung, umfassend zumindest zwei Polschuhe und zumindest einen Spulenkern, vorzusehen, bei dem die Gefahr einer Verletzung eines Kabels insbesondere im Bereich von Polschuh und/oder Spulenkern soweit wie möglich vermieden wird.

Die Aufgabe wird für einen Polschuh nach dem Oberbegriff des Anspruchs 1 dadurch gelöst, dass eine magnetisch-induktive Durchflussmesseinrichtung mit zumindest einem Polschuh mit zumindest einer Kabelführungseinrichtung zum geführten Hindurchführen eines Kabels durch den Polschuh versehen ist. Weiterbildungen der Erfindung sind in den abhängigen Ansprüchen definiert.

Dadurch wird ein Polschuh geschaffen, der aufgrund des Vorsehens der Kabeldurchführungseinrichtung einen geführten Durchtritt des oder der Kabel durch den Polschuh ermöglicht. Das oder die Kabel müssen somit nicht mehr an dem Polschuh vorbeigeführt werden, sondern können durch diesen hindurchtreten. Dies führt einerseits dazu, dass die Gefahr eines Einklemmens behoben werden kann, andererseits dazu, dass eine Beschädigung des Kabels an scharfen Metallkanten des Polschuhs oder des Spulenkerns vermieden werden kann. Vorteilhaft ist die Kabelführungseinrichtung ein in den Polschuh einfügbarer oder eingefügter Montageclip. Dieser kann zum Führen und zum Schutz des Kabels im Bereich von Polschuh und Spulenkern diesen, da das zumindest eine Kabel durch diesen geschützt hindurchgeführt wird. Auch bei Vibrationen im Einsatz der magnetisch-induktiven Durchflussmesseinrichtung kommt es somit nicht mehr zum Kurzschluss des Kabels am Spulenkern, da das Kabel in dem Montageclip innerhalb des Polschuhs geführt und gegen Beschädigungen sicher geschützt wird. Die Ausschussrate an aufgrund Kabelbeschädigung bereits bei der Montage nicht funktionstüchtigen magnetisch-induktiven Durchflussmesseinrichtungen kann ebenfalls verringert werden, da auch bei der Montage nicht die Gefahr einer Verletzung des Kabels an scharfen Metallkanten von Polschuh und/oder Spulenkern besteht. Durch das gezielte Hindurchführen des Kabels durch den Polschuh innerhalb der Kabelführungseinrichtung in Form des Montageclips wird eine genaue Positionierung und Rückhaltung des zumindest einen Kabels bei der Montage möglich. Da der Montageclip lediglich in den Polschuh eingefügt und das zumindest eine Kabel in den Montageclip eingelegt zu werden braucht, können auch die Montagezeiten gegenüber dem bisherigen Vorgehen verringert werden bei einer zugleich wiederkehrend genauen Positionierung des Kabels. Das Kabel befindet sich stets reproduzierbar genau in der gewünschten Positionierung, geführt im Polschuh im Innern der magnetisch-induktiven Durchflussmesseinrichtung.

Der Montageclip weist vorteilhaft einen länglichen zentralen Körper auf, mit dem er in eine längliche Aufnahmeöffnung in dem Polschuh eingefügt sein bzw. werden kann. Er sitzt nachfolgend in dieser länglichen Aufnahmeöffnung, so dass das Kabel durch den Montageclip hindurch und in diesem geführt werden kann. Mit seinem zumindest einen Befestigungsbereich wird der Montageclip an dem Polschuh in der länglichen Aufnahmeöffnung liegend befestigt. Eine einfache Befestigung des Montageclips an dem Polschuh ist insbesondere dadurch möglich, dass der Befestigungsbereich des Montageclips zumindest teilweise nutenförmig ausgebildet ist. Der mit der länglichen Aufnahmeöffnung versehene Abschnitt des Polschuhs kann in diesem nutenförmigen Abschnitt des Befestigungsbereichs aufgenommen werden. Der Polschuh kann blechartig, im Wesentlichen flach ausgebildet werden, wobei die Kanten, die die längliche Aufnahmeöffnung umgeben, in die Nuten bzw. den nutenförmigen Abschnitt des Befestigungsbereichs des Montageclips eingreifen. Die Formgebung des Polschuhs kann ferner einen mittleren Abschnitt und zwei sich an diesen anschließende, diesem gegenüber abgewinkelte, einander gegenüberliegende Abschnitte vorsehen, wobei die Kabelführungseinrichtung in Form des Montageclips in dem mittleren Abschnitt angeordnet ist.

Der Montageclip kann mit seinem Befestigungsbereich in die längliche Aufnahmeöffnung eingeschoben werden, insbesondere von einer benachbarten Öffnung aus, die in die längliche Aufnahmeöffnung mündet oder übergeht. Die Führungsöffnung ist vorteilhaft an einem Ende des Montageclips angeordnet und in nur zwei Richtungen von einer Wandung umgrenzt. Eine offene Seite ist vorteilhaft endseitig an dem Montageclip gebildet, sich in Richtung der der länglichen Aufnahmeöffnung benachbarten Öffnung des Polschuhs öffnend, so dass die Montage des Kabels ggf. noch leichter von letzterer Öffnung aus erfolgen kann.

Der Montageclip kann zumindest einen Kabelführungskanal aufweisen. Dieser erstreckt sich vorteilhaft gegenüberliegend zu der offenen endseitig bezüglich des Montageclips angeordneten Seite der Führungsöffnung. Die die Führungsöffnung an zwei Seiten umgrenzenden Seitenwandungen erstrecken sich in Längsrichtung des Montageclips weiter als Seitenwandungen des Kabelführungskanals. Letzterer ist vorteilhaft rampenförmig ausgebildet, von der Führungsöffnung aus ansteigend in Richtung des der Führungsöffnung gegenüberliegenden Endes des Montageclips, an dem das Kabel aus diesem wieder herausgeführt werden soll. Das durch die Führungsöffnung des Montageclips hindurch geführte Kabel wird somit nicht auf dem kürzesten Wege aus diesem wieder herausgeführt, sondern in den Kabelführungskanal eingelegt in diesem geführt. Somit kann das Kabel nahe am Polschuh anliegend geführt werden. Dabei ist es auch möglich, das Kabel an einer Stelle wieder aus dem Montageclip herauszuführen, an der die geringste Gefahr einer Beschädigung für das Kabel besteht, also insbesondere die geringste Gefahr eines Knickens des Kabels. Zum weiteren Knickschutz des in den Montageclip eingelegten bzw. einlegbaren Kabels kann der Übergangsbereich von der Führungsöffnung in den Kabelführungskanal hinein gerundet bzw. mit einem Radius versehen ausgebildet sein. Zum weiteren Schutz des Kabels im Innern des Montageclips steigt der rampenförmig ausgebildete Kabelführungskanal mit einer moderaten Steigung an. Der Anstiegswinkel der Rampe des Kabelführungskanals, also der Winkel der Bodenfläche des Kabelführungskanals gegenüber insbesondere der Ebene der Außenfläche des Montageclips kann beispielsweise 10 ° bis 20 °, insbesondere 14,5 °betragen. Auch andere Anstiegswinkel des rampenförmigen Kabelführungskanals sind möglich.

Um den zumindest teilweise nutenförmigen Befestigungsbereich an dem Montageclip auszubilden, können in diesem Flansche gebildet werden. Diese können auf der Ober- und der Unterseite des Montageclips vorgesehen werden, wobei die Flansche nach dem Einfügen des Montageclips in die längliche Aufnahmeöffnung auf der Ober- und Unterseite des blechartigen Polschuhs, die längliche Aufnahmeöffnung umgebend, anliegen können, also das Polschuhblech zwischen sich aufnehmen. Hierdurch wird der die längliche Aufnahmeöffnung umgebende Bereich des Polschuhblechs auch stabilisiert. Durch das Vorsehen der Kabelführungseinrichtung in Form des Montageclips ist somit auch bei vergleichsweise geringer Dicke des Polschuhblechs ein stabiler Schutz für das dort hindurch geführte Kabel möglich.

Vorteilhaft ist der Polschuh im Wesentlichen gleichmäßig flach ausgebildet, wobei der Montageclip grundsätzlich auch an die Formgebung des Polschuhs im Bereich von dessen Aufnahmeöffnung angepasst werden kann.

Weiter vorteilhaft ist in der Führungsöffnung des Montageclips zumindest ein vorkragendes Element zum Unterstützen der Führung eines eingefügten Kabels vorgesehen. Das vorkragende Element kann insbesondere noppenförmig sein.

Beispielsweise können an den beiden einander gegenüberliegenden Wandungen der Führungsöffnung des Montageclips noppenförmige Elemente vorgesehen sein. Die vorkragenden Elemente, insbesondere noppenförmigen Elemente, ermöglichen ein Einfügen des Kabels von der offenen Seite der in der Draufsicht u-förmigen Führungsöffnung aus, erschweren jedoch nach dem Einfügen des Kabels, bei entsprechender Dimensionierung der vorkragenden Elemente in Bezug auf den Kabeldurchmesser und die Öffnungsweite der Führungsöffnung, einen Wiederaustritt des Kabels aus dieser.

Auch außenseitig kann der Montageclip mit zumindest einem vorkragenden Element versehen sein, um den Halt in der länglichen Aufnahmeöffnung des Polschuhs zu verbessern. Dies kann sich insbesondere bei Fertigungstoleranzen bezüglich der länglichen Aufnahmeöffnung im Polschuh als vorteilhaft erweisen, da über die vorkragenden, insbesondere noppenförmigen, Elemente ein Ausgleich der Fertigungstoleranzen und somit ein guter Halt des Montageclips in der länglichen Aufnahmeöffnung des Polschuhs geschaffen werden kann.

Als weiter vorteilhaft erweist es sich, die Kabelführungseinrichtung in Form eines Montageclips so auszubilden, dass dieser zum Positionieren des Spulenkerns verwendbar ist. Durch das Vorsehen des Montageclips zur Kabelführung durch den Polschuh hindurch besteht dabei zusätzlich die Möglichkeit, diesen auch zur Positionierung eines Spulenkerns mit zu verwenden. Insbesondere kann der Spulenkern mit entsprechenden Ausnehmungen versehen sein, in die der zumindest eine Montageclip eingreifen kann. Hierdurch ist eine exakte Positionierung des Spulenkerns in Bezug auf den Polschuh, der mit dem Montageclip versehen ist, möglich.

Bei der Montage der magnetisch-induktiven Durchflussmesseinrichtung können Spule, Polschuh mit Kabelführungseinrichtung bzw. dem Montageclip und zumindest einem dort hindurchgeführten Kabel und Spulenkern sowie eventuelle weitere Einrichtungen als Einheit vormontiert und auf einem Messrohr montiert werden. Nachfolgend wird an dem zumindest einen Kabel angegriffen und dieses in dem Montageclip im Polschuh liegend zurückgezogen und dadurch gestrafft. Hierbei besteht ebenfalls nicht die Gefahr einer Beschädigung des Kabels, da dieses in der Kabelführungseinrichtung sicher aufgenommen und geführt ist. Eine komplizierte Verlegung des Kabels ist nicht mehr erforderlich.

Zur näheren Erläuterung der Erfindung wird im Folgenden ein Ausführungsbeispiel von dieser näher anhand der Zeichnungen beschrieben. Diese zeigen in:
- Figur 1: eine Querschnittsansicht einer magnetisch-induktiven Durchflussmesseinrichtung mit zwei erfindungsgemäßen Polschuhen,
- Figur 2: eine perspektivische Ansicht eines der Polschuhe mit eingefügtem erfindungsgemäßen Montageclip gemäß Figur 1,
- Figur 3: eine perspektivische Draufsicht auf den Montageclip gemäß Figur 2,
- Figur 4: eine Unteransicht des Montageclips gemäß Figur 2,
- Figur 5: eine Draufsicht auf den Montageclip gemäß Figur 2,
- Figur 6: eine Frontansicht des Montageclips gemäß Figur 2,
- Figur 7: eine Seitenansicht des Montageclips gemäß Figur 2, und
- Figur 8: eine Längsschnittansicht des Montageclips gemäß Figur 5 entlang der Linie A - A.

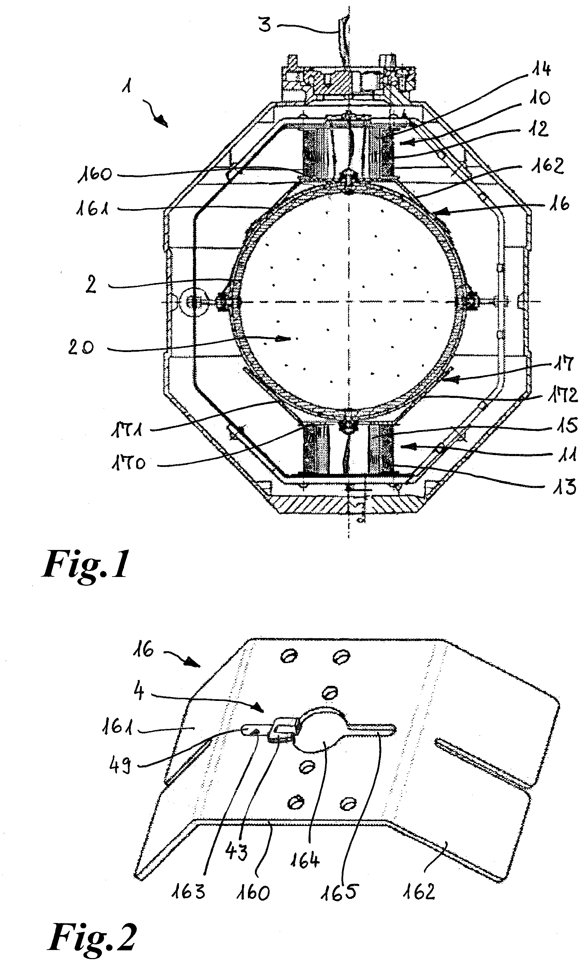

In Figur 1 ist eine magnetisch-induktive Durchflussmesseinrichtung 1 in Montage an einem Messrohr 2 gezeigt. Die magnetisch-induktive Durchflussmesseinrichtung 1 dient zum Ermitteln der Durchflussmenge an Medium durch das Messrohr 2. Zu diesem Zweck erzeugt die magnetisch-induktive Durchflussmesseinrichtung 1 ein Magnetfeld senkrecht zu den innerhalb des Messrohrs 2 bewegten Ladungsträgern des dort hindurchströmenden, in Figur 1 lediglich angedeuteten Mediums 20. Dieses strömt entweder aus der Zeichenebene heraus, dem Betrachter entgegen, oder in die Zeichenebene hinein. In Figur 1 ist die Strömungsrichtung aus der Zeichenebene heraus, dem Betrachter entgegen, durch Punkte der Strömungspfeilrichtung angedeutet.

Das Magnetfeld wird durch zwei bezüglich des Messrohres 2 einander gegenüberliegende Spulenbaugruppen 10, 11 mit jeweils einem Spulenkörper 12, 13 auf Spulenkernen 14, 15, versehen mit jeweils einem Polschuh 16, 17 erzeugt. Die Polschuhe 16, 17 dienen der Feldführung sind entsprechend so geformt, dass sie sich außenseitig an das Messrohr 2 anlegen. Zu diesem Zwecke weisen sie jeweils einen mittleren Abschnitt 160, 170 auf, an den sich zwei einander gegenüberliegende abgewinkelte seitliche Abschnitte 161, 162 bzw. 171, 172 anschließen. Dies ist besser Figur 2 zu entnehmen. Die drei Abschnitte 160, 161, 162 bzw. 170, 171, 172 kontaktieren das Messrohr 2 außenseitig jeweils tangential. Senkrecht zur Durchflussrichtung des Mediums 20 und zur Richtung des erzeugten Magnetfeldes werden Messelektroden angeordnet, in denen eine Messspannung induziert wird.

Mit den Messelektroden ist ein Koaxialkabel 3 verbunden, wie in Figur 1 angedeutet. Um zu vermeiden, dass das Koaxialkabel beim Vorbeiführen an dem Polschuh 16 bzw. 17 bzw. an dem Spulenkern 14 bzw. 15 beschädigt wird, weisen die beiden Polschuhe 16, 17 jeweils eine Kabelführungseinrichtung in Form eines Montageclips 4 auf, wobei das Koaxialkabel durch die Kabelführungseinrichtung und den jeweiligen Polschuh hindurch geführt werden kann.

In Figur 2 ist der eine Polschuh 16 in perspektivischer Ansicht mit in eine längliche Öffnung 163 von diesem eingefügtem Montageclip 4 gezeigt. Das Einfügen des Montageclips 4 erfolgt von einer benachbarten etwa kreisförmigen zentralen Durchgangsöffnung 164 aus. Diese ist ebenfalls in Figur 2 zu sehen. Die zentrale Durchgangsöffnung 164 geht in zwei längliche Öffnungen über, die bereits genannte längliche Öffnung 163 sowie eine dieser bezüglich der zentralen Durchgangsöffnung 164 gegenüberliegende längliche Öffnung 165. Auch in die längliche Öffnung 165 kann der Montageclip 4 eingefügt werden. Grundsätzlich ist es insbesondere ebenfalls möglich, sowohl in die längliche Öffnung 163 als auch in die längliche Öffnung 165 jeweils einen Montageclip 4 zum Durchführen des Kabels 3 einzufügen.

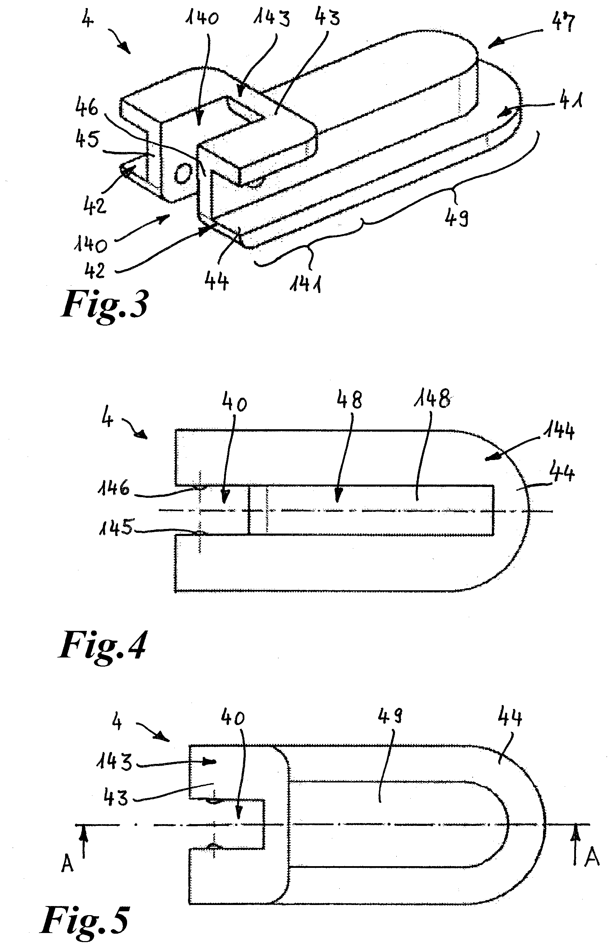

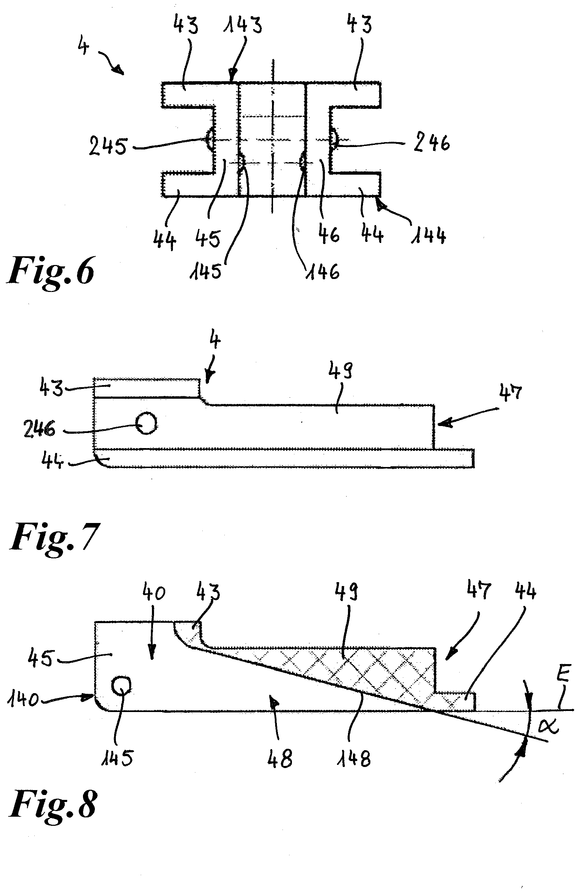

Der Montageclip 4 ist im Detail in den Figuren 3 bis 8 gezeigt. Der Montageclip 4 weist eine längliche Formgebung auf mit einem geraden offenen Ende 140 und einem gerundeten geschlossenen Ende 47. An dem offenen Ende 140 ist eine Führungsöffnung 40 zum Durchführen des Kabels 3 vorgesehen. An den die Führungsöffnung 40 aufweisenden Abschnitt 141 schließt sich ein zentraler dreiseitig geschlossener länglicher Abschnitt 49 an. Zum Befestigen an dem Polschuh 16 ist der die Führungsöffnung 40 umfassende Abschnitt 141 einen umlaufenden Befestigungsbereich 41 auf. Dieser umfasst einen nutenförmigen Abschnitt 42. Der nutenförmige Abschnitt 42 ist dadurch gebildet, dass, wie der Unteransicht des Montageclips 4 gemäß Figur 4, der Draufsicht auf diesen gemäß 5 sowie der Frontansicht des Montageclips 4 gemäß Figur 6 zu entnehmen ist, auf beiden einander gegenüberliegenden Außenseiten 143, 144 des Montageclips 4 im Bereich des nutenförmigen Abschnitts 42 vorkragende Flansche 43, 44 vorgesehen sind. Wie der perspektivischen Ansicht des Montageclips 4 gemäß Figur 3 zu entnehmen ist, erstreckt sich zwischen den beiden vorkragenden Flanschen 43, 44 jeweils eine Seitenwandung 45, 46 der Führungsöffnung 40. Wie der Frontansicht gemäß Figur 6 zu entnehmen ist, ergibt sich durch die beiden Flansche 43, 44 und die dazwischen angeordnete Seitenwandung 45, 46 die jeweilige außenseitige Nutenform des nutenförmigen Abschnitts 42.

Wie dem Vergleich der Figuren 4 und 5, also der Draufsicht und der Unteransicht des Montageclips 4 entnommen werden kann, erstreckt sich der vorkragende Flansch 44 außenseitig über den gesamten Umfang des Montageclips 4 hinweg, während sich der vorkragende Flansch 43 lediglich um die Führungsöffnung 40 herum erstreckt. Der nutenförmige Abschnitt 42 ist somit lediglich in dem Bereich angeordnet, der die Führungsöffnung 40 umgibt. Grundsätzlich ist es jedoch ebenfalls möglich, auch den vorkragenden Flansch 43 über die gesamte Erstreckung des Montageclips 4, also allseitig umlaufend um diesen, also auch um den gesamten zentralen Abschnitt 49 vorzusehen. Das Vorsehen des vorkragenden Flansches 43 lediglich um die Führungsöffnung 40 herum ist jedoch für einen sicheren Halt des Montageclips 4 an dem Polschuh 16 ausreichend. Der zentrale Abschnitt 49 liegt in der länglichen Öffnung 163, wie in Figur 2 angedeutet. Dadurch, dass dort lediglich der kürzere vorkragende Flansch 43 vorgesehen ist, kann der Spulenkern 14 dort problemlos mit dem Polschuh 16 verbunden werden. Insbesondere kann der vorkragende Flansch 43 des Montageclips 4 zur Positionierung des Spulenkerns 14 verwendet werden. Der Spulenkern 14 kann insbesondere mit einer Nut oder einer Ausnehmung versehen sein, in die der vorkragende Flansch 43 eingreifen kann, um die exakte Positionierung vornehmen zu können.

Wie der Querschnittsansicht in Figur 8, die den Schnitt durch den Montageclip 4 gemäß Figur 5 entlang der Linie A - A zeigt, entnommen werden kann, ist die Führungsöffnung 40 in Richtung des dieser gegenüberliegenden Endes 47 des Montageclips nicht mit einer Seitenwandung versehen, sondern geht hier über in einen rampenförmigen Kabelführungskanal 48. Der rampenförmige Kabelführungskanal 48 weist eine winklig zu der Außenfläche des Montageclips 4, also der aufgespannten Ebene E, in der sich die Außenseite 144 des vorkragenden Flansches 44 erstreckt, angeordnete Bodenfläche 148 auf. Die Seitenwandungen des Kabelführungskanals 48 sind die sich auch entlang von diesem erstreckenden Seitenwandungen 45, 46. Der Winkel α der Bodenfläche 148 des Kabelführungskanals 48 gegenüber der Ebene E der Außenseite 144 des vorkragenden Flansches 44 ist vorteilhaft ein spitzer Winkel und kann insbesondere 10 ° bis 20 °, beispielsweise 14,5 ° betragen. Auch andere Neigungswinkel sind hier möglich, wobei durch das Vorsehen der schräg ansteigenden Bodenfläche 148, ausgehend von der Führungsöffnung 40, fortscheitend bis zur Außenseite 144 des vorkragenden Flansches 44, bezüglich der Kabelführung ein nahes Anlegen des Kabels an dem Polschuh ermöglicht wird. Eine Beschädigung oder ein Verklemmen des Kabels kann dadurch auch bei im Einsatz der magnetisch-induktiven Durchflussmesseinrichtung 1 auftretenden Vibrationen sehr gut vermieden werden.

Wie der Querschnittsansicht des Montageclips 4 gemäß Figur 8 ferner entnommen werden kann, ist der zentrale, den Kabelführungskanal 48 umfassende Abschnitt 49 des Montageclips 4 in dem Bereich, in dem sich der Kabelführungskanal 49 in Richtung des vorkragenden Flansches 44 ansteigt, als Vollkörper ausgebildet. Dieser zentrale Abschnitt 49 erstreckt sich in der länglichen Öffnung 163 bzw. 165 des Polschuhs 16 bzw. einer entsprechenden länglichen Öffnung des Polschuhs 17 (nicht gezeigt), ist daher ausreichend stabil ausgebildet, um eine sehr gute Führung für das hindurchgeführte bzw. im Kabelführungskanal 48 und der Führungsöffnung 40 liegende Kabel zu ermöglichen und sowohl bei mechanischen als auch bei thermischen Belastungen stabil zu bleiben. Zu diesem Zweck kann der Montageclip 4 beispielsweise aus einem temperaturbeständigen Polymer, insbesondere einem faserverstärkten Polymer, bestehen.

Um das in die Führungsöffnung 40 eingefügte Kabel 3 besser hindern zu können, ungewollt aus der Führungsöffnung 40 heraus in die große Durchgangsöffnung 164 hinein gleiten zu können, sind die beiden Seitenwandungen 45, 46 mit vorkragenden noppenförmigen Elemente 145, 146 versehen. Je nach Dimensionierung des Kabels bzw. der Öffnungsweite d der Führungsöffnung 40 können die in diese hinein vorkragenden noppenförmigen Elemente 145, 146 das in die Führungsöffnung 40 bzw. den Montageclip 4 eingefügte Kabel 3 an einem Herausgleiten aus dieser hindern. Beispielsweise reicht es bei einer Öffnungsweite d von 2 bis 3 mm aus, wenn die noppenförmigen Elemente 145, 146 weniger als 0,3 mm über die Oberfläche der Seitenwandungen 45, 46 vorstehen.

Auch auf der Außenseite der beiden Seitenwandungen 45, 46 können jeweils vorkragende Elemente 245, 246 vorgesehen sein, wie den Figuren 3, 6 und 7 entnommen werden kann. Die beiden vorkragenden Elemente 245, 246 können einerseits zum Ausgleich von Fertigungstoleranzen bezüglich der länglichen Öffnung 163 bzw. 165 und andererseits zum besseren Fixieren des Montageclips 4 in diesen dienen. Die vorkragenden Elemente 245, 246 können beispielsweise weniger als einen Millimeter über die Oberfläche der Seitenwandungen 45, 46 vorstehen, wobei auch andere Abmessungen hier selbstverständlich möglich sind.

Wie erwähnt, kann der Halt an dem jeweiligen Spulenkern 14, 15 durch das Vorsehen der Montageclips 4 als Kabelführungseinrichtungen in den Polschuhen verbessert und das Kabel 3 gegen Beschädigung an dem Polschuh geschützt werden, da das Kabel nun durch den Polschuh hindurchgeführt wird und nicht mehr an diesem vorbei. Das Kabel 3 befindet sich nach dem Einfädeln in den Montageclip 4 bzw. dessen Führungsöffnung 40 und Kabelführungskanal 48 in der gewünschten genauen Positionierung. Die Montage des Kabels an dem Polschuh ist daher einfach und unkompliziert möglich. Beispielsweise werden Spulenkörper 12, 13, Spulenkern 14, 15 und Polschuh 16, 17 mit Montageclips 4 und Koaxialkabel 3 als Einheit vormontiert. Diese Einheit wird nachfolgend an dem Messrohr 2 montiert, das Kabel 3 zurückgezogen und gestrafft, um die gewünschte optimale Positionierung in der Führungsöffnung 40 und dem Kabelführungskanal 48 einzunehmen. Weitere Maßnahmen sind nicht mehr erforderlich, so dass eine einfache Montage und kurze Montagezeiten ermöglicht werden.

Neben den im Vorstehenden beschriebenen und in den Figuren gezeigten Ausführungsvarianten von Polschuhen, Montageclips und magnetisch-induktiven Durchflussmesseinrichtungen sowie beliebigen Kombinationen der genannten Merkmale können noch zahlreiche weitere Ausführungsvarianten vorgesehen werden, bei denen der Polschuh mit zumindest einer Kabelführungseinrichtung, insbesondere in Form eines Montageclips, zum geführten Hindurchführen eines Kabels durch den Polschuh versehen ist.

### Bezugszeichenliste

- 1: magnetisch-induktive Durchflussmesseinrichtung
- 2: Messrohr
- 3: Koaxialkabel
- 4: Montageclip
- 10: Spulenbaugruppe
- 11: Spulenbaugruppen
- 12: Spulenkörper
- 13: Spulenkörper
- 14: Spulenkern
- 15: Spulenkern
- 16: Polschuh
- 17: Polschuh
- 20: Medium
- 40: Führungsöffnung
- 41: Befestigungsbereich
- 42: nutenförmiger Abschnitt
- 43: vorkragender Flansch
- 44: vorkragender Flansch
- 45: Seitenwandung
- 46: Seitenwandung
- 47: Ende
- 48: Kabelführungskanal
- 49: zentraler Abschnitt
- 140: (offenes) Ende von 4/offene Seite von 40
- 141: Abschnitt
- 143: Außenseite
- 144: Außenseite
- 145: vorkragendes noppenförmiges Element
- 146: vorkragendes noppenförmiges Element
- 148: Bodenfläche
- 160: mittlerer Abschnitt
- 161: seitlicher Abschnitt
- 162: seitlicher Abschnitt
- 163: längliche Öffnung
- 164: kreisförmige zentrale Durchgangsöffnung
- 165: längliche Öffnung
- 170: mittlerer Abschnitt
- 171: seitlicher Abschnitt
- 172: seitlicher Abschnitt
- 245: vorkragendes Element
- 246: vorkragendes Element
- α: Winkel
- E: Ebene
- d: Öffnungsweite

## Patentansprüche

1. Magnetisch-induktive Durchflussmesseinrichtung (1), umfassend zumindest zwei Polschuhe (16,17) und zumindest einen Spulenkern (14,15),
**dadurch gekennzeichnet, dass**
zumindest einer der Polschuhe (16,17) mit zumindest einem Montageclip (4) zum geführten Hindurchführen eines Kabels (3) durch den Polschuh (16,17) versehen ist,
wobei der Montageclip (4) dazu eingerichtet ist, den Spulenkern (14, 15) zu positionieren, wobei der Montageclip (4) eine Führungsöffnung (40) zum Durchführen des zumindest einen Kabels (3) und einen Befestigungsbereich (41) zum Befestigen des Montageclips (4) an dem Polschuh (16, 17) umfasst, und
wobei die Führungsöffnung (40) an einem Ende des Montageclips (4) angeordnet und in nur zwei Richtungen von einer Wandung (45, 46) umgrenzt ist,
wobei der Montageclip (4) in eine längliche Aufnahmeöffnung (163, 165) in dem Polschuh (16,17) eingefügt ist.

2. Magnetisch-induktive Durchflussmesseinrichtung nach Anspruch 1, **dadurch gekennzeichnet, dass**
der Polschuh (16,17) blechartig im Wesentlichen flach ausgebildet ist.

3. Magnetisch-induktive Durchflussmesseinrichtung nach einem der vorstehenden Ansprüche,
**dadurch gekennzeichnet, dass**
der Polschuh (16,17) einen mittleren Abschnitt (160) und zwei sich an diesen anschließende, diesem gegenüber abgewinkelte, einander gegenüberliegende Abschnitte (161,162) aufweist, wobei die Kabelführungseinrichtung (4) in dem mittleren Abschnitt (160) angeordnet ist.

## Claims

1. Electromagnetic flowmeter (1), comprising at least two pole pieces (16, 17) and at least one coil core (14, 15),
**characterized in that** at least one of the pole pieces (16, 17) is provided with at least one mounting clip (4) to guide a cable (3) through the pole piece (16, 17), wherein the mounting clip (4) is designed to position the coil core (14, 15), wherein the mounting clip (4) comprises a guide opening (40) to guide through the at least one cable (3) and a fastening area (41) to fix the mounting clip (4) to the pole piece (16, 17), and wherein the guide opening (40) is arranged on one end of the mounting clip (4) and is limited by a wall (45, 46) in only two directions, wherein the mounting clip (4) is inserted in an elongated slot (163, 165) in the pole piece (16, 17).

2. Electromagnetic flowmeter as claimed in Claim 1,
**characterized in that** the pole piece (16, 17) is has a flat design essentially in the form of a plate.

3. Electromagnetic flowmeter as claimed in one of the previous claims,
**characterized in that** the pole piece (16, 17) has a central section (160) and two opposite sections (161, 162) which are adjacent to said central section and angled in relation to said central section, wherein the cable guide unit (4) is arranged in the central section (160).

## Revendications

1. Débitmètre électromagnétique (1), comprenant au moins deux pièces polaires (16, 17) et au moins un noyau de bobine (14, 15),
**caractérisé en ce qu'**au moins l'une des pièces polaires (16, 17) est pourvue d'au moins une clip de montage (4) pour guider un câble (3) à travers la pièce polaire (16, 17), le clip de montage (4) étant adapté pour positionner le noyau de bobine (14, 15), le clip de montage (4) comprenant une ouverture de guidage (40) pour faire passer l'au moins un câble (3) à travers celle-ci et une partie de fixation (41) pour fixer le clip de montage (4) à la pièce polaire (16, 17), et l'ouverture de guidage (40) étant disposée à une extrémité du clip de montage (4) et étant limitée dans seulement deux directions par une paroi (45, 46), le clip de montage (4) étant inséré dans une ouverture de réception allongée (163, 165) dans la pièce polaire (16, 17).

2. Débitmètre électromagnétique selon la revendication 1,
**caractérisé en ce que** la pièce polaire (16, 17) est conçue en forme de feuille, pour l'essentiel plate.

3. Débitmètre électromagnétique selon l'une des revendications précédentes,
**caractérisé en ce que** la pièce polaire (16, 17) présente une section centrale (160) et deux sections (161, 162) opposées, adjacentes à ladite section centrale et coudées par rapport à ladite section centrale, le dispositif de guidage de câble (4) étant disposé dans la section centrale (160).
